# EUROPEAN PATENT SPECIFICATION

(11) **EP 1 463 414 B1**
(45) Date of publication and mention of the grant of the patent: **02.12.2009**
(21) Application number: 02805232.2
(22) Date of filing: 20.12.2002
(51) Int. Cl.: A23D 9/00, A23G 3/00, C11C 3/10, C11C 3/12

(54) **TEMPERING FAT COMPOSITION**
TEMPERIERFETTZUSAMMENSETZUNG
COMPOSITION DE TEMPERAGE A BASE DE GRAISSES

(30) Priority: 20.12.2001 WO PCT/BE01/00218
(43) Date of publication of application: 06.10.2004
(73) Proprietor: Fuji Oil Europe, 9042 Gent (BE)
(72) Inventor: CLEENEWERCK, Bernard, B-8301 Knokke-Heist (BE); NAKAMURA, Ichiro, B-9840 De Pinte (BE); VAN IMSCHOOT, Maarten, Dieter, B-9230 Wetteren (BE)
(74) Representative: Luys, Marie-José A.H.
(86) International application number: PCT/BE2002/000194
(87) International publication number: WO 2003/053152

(56) References cited:
- US-A- 4 205 095
- US-A- 4 276 322
- US-A- 4 702 928
- US-A- 5 690 985
- DATABASE WPI Section Ch, Week 198108 Derwent Publications Ltd., London, GB; Class D23, AN 1979-55625B XP002249686 & CA 1 093 579 A (FUJI OIL CO LTD), 13 January 1981 (1981-01-13)

## Description

The present invention relates to a tempering fat composition and a method for the production of a tempering fat suitable for use in the manufacturing of confectionery products according to the preamble of the first claim. The present invention relates in particular to a tempering vegetable fat composition.

Cocoa butter is a fat which is obtained from cocoa beans. It is stiff solid at room temperature, but melts smoothly in the mouth. It has a narrow melting range and shows specific shrinking properties on cooling to solidify. It has a long storage life and it is widely used in confectionery applications, particularly as the fat for chocolate. However, because the growing areas and the amount of cocoa beans grown show periodic variations, its price may vary from cheap to very expensive. In view of these circumstances, various processes for the production of cocoa butter replacers on a commercially interesting scale have been developed.

Tempering is an important step in the production of chocolate products. During tempering, a molten chocolate mixture is subjected to a temperature conditioning process, in particular the molten chocolate mixture is subjected to a process involving cooling and heating, with the aim of stimulating and maximising crystallisation of the fat in a stable crystalline form. The tempering operation implies the desired properties of gloss, mouth feel, and easy release from a mould etc. to the chocolate end product and assists in minimising blooming of the chocolate upon storage.

To improve the hardness of the chocolate end product and to allow keeping prices at a more stable level, cocoa butter replacers have been developed. Different classes of cocoa butter replacers exist, some are tempering, others are non-tempering. The cocoa butter replacers are used in various confectionery applications like coatings, bars and fillings.

A first group of frequently used tempering hard butters includes the so-called "cocoa butter equivalents" or CBE. A CBE is characterised by a good compatibility with cocoa butter, giving a good snappyness, good heat resistance, strong cooling sensation at eating and substantially no waxiness. From a qualitative point of view the CBE's are the best cocoa butter replacers. The idea behind the CBE is to provide a product, the composition of which resembles the composition of cocoa butter to the best possible extent. In this respect it is desirable that the CBE has a SUS content of > 65 wt.%, the main triglycerides being P0St, StOSt, POP. Herein P designates palmitic acid, St designates stearic acid, O designates oleic acid, S designates saturated fatty acid and U designates unsaturated fatty acid. CBE's are mostly produced by mixing an amount of a first fat, a palm oil mid fraction, with a second fat, for example illipe butter or a stearin obtained by fractionation of a wild fat, for example shea stearin. As these wild fats are only available in limited quantities, they are expensive.

To allow obtaining a tempering hard butter with the above described properties, it is essential that both the first and the second fat contain a high amount of symmetrical triglycerides. These requirements however put high demands to the fractionation of palm oil to a Palm Oil Mid Fraction. To allow meeting these requirements, the fractionation needs to be done in such a way that the Palm Oil Mid Fraction contains at least 60 wt.% of SUS. The wild fat is the source of StOSt when Shea Stearin is used, or a mixture of StOSt and POSt when Illipe butter is used.

To give the CBE the desired increased hardness and heat resistance without creating waxyness, the second fat should be incorporated in a sufficient amount. Hardness and heat resistance are properties which are of utmost importance if it is desired to produce high quality confectionery products like chocolate coatings or bars. High quality confectionery products demand that (i) the product is snappy at room temperature, (ii) has a good heat resistance, which means that it should not melt when touched by hand or when stored at higher temperatures (e.g. 28°C) during summer periods, (iii) the product when eating completely melts in the mouth without implying any waxy feeling because part of the fat has not molten at body temperature. Cocoa butter and a high quality CBE show these desirable characteristics.

A second group of cocoa butter replacers are non-tempering and non-lauric (NL-CBR ) fats. These non-lauric cocoa butter replacement fats may be obtained by a trans-selective hydrogenation of commodity liquid oils such as for example soybean oil, sunflower seed oil, rapeseed oil and/or palm olein with a high iodine value. The mechanism behind the non-lauric cocoa butter replacement fats is that the trans-selective hydrogenation of the liquid oil is carried out in such a way that it mainly yields SE₂ type triglycerides, whereas the production of SSS type triglycerides is limited as much as possible. E is understood to denote trans-iso-oleic acid in general, in particular elaidic acid. The SE₂ triglycerides imply the steep solid fat content profile to the NL-CBR. The higher melting SSS type triglyceride is mostly removed through fractionation.

Although these non-lauric cocoa butter replacement fats are substantially cheaper, they show a limited compatibility with cocoa butter, give a more waxy mouth feeling, less cooling sensation at eating and less snappyness. Another disadvantage of the non-lauric cocoa butter replacement fats is the high level of Trans Fatty Acids (> 50 wt.%), which at present is a health issue of increasing importance.

There is thus a need for a hard butter for use as a tempering fat suitable for use in confectionery products. In particular there is a need for a high quality cocoa butter replacer for use as a tempering fat, which can be produced at an acceptable cost.

From GB-A-1.230.317 a process is known for producing a vegetable fat product which is suitable for use in replacing at least part of cocoa butter, the properties of the vegetable fat product approaching those of cocoa butter. According to the process of GB-A-1.230.317 a palm oil middle melting point fraction (PMF) is subjected to a hardening process through hydrogenation of the fraction. The hydrogenation reaction is carried out in specific conditions so as to minimise the formation of trans fatty acids. According to GB-A-1.230.317 the trans fatty acid content should remain below 5 wt.%, as above this content remarkable changes will appear when mixing the hardened PMF with cocoabutter and the taste and mouth feel will be reduced. Triglycerides to be particularly minimised in the hydrogenated PMF are said to be S₂E (mono-elaido-di-saturated glyceride) and SE₂ (di-elaido-mono-saturated glyceride).

From GB-A-1.349.846 another process for the production of a cocoa butter substitute is known. The cocoa butter substitute is intended to replace at least part of the cocoa butter present in chocolate and confectionery products. According to the process of GB-A-1.349.846, a vegetable fat containing di-saturated and di-unsaturated glycerides of C₁₆ and C₁₈ fatty acids, is subjected to a fractionation to obtain a fraction which is substantially free from triglycerides containing more than one unsaturated fatty acid residu, but contains disaturated triglycerides with polyunsaturated fatty acids in particular linoleic acid. The thus obtained fraction is subjected to a partial hydrogenation in non-isomerising conditions by using a fresh nickel catalyst, to avoid formation of iso-oleic acid. According to the teaching of GB-A-1.349.846 the hydrogenation reaction serves the purpose of converting the poly-unsaturated fatty acids, which cause softness, to mono unsaturated fatty acids, whereby the formation of trans fatty acids should be avoided. The glycerides of the trans acid, known as iso-oleic acid, are thought to have an undesirably high melting point and to be incompatible with cocoa butter.

EP-A-498 487 relates to the use of 2-trans-unsaturated triacyl glycerol as a tempering accelerator in a process for the manufacturing of edible emulsion spreads. A tempering accelerator is defined as a triglyceride composition capable of accelerating the rate of crystallisation of fats from a super cooled melt.

US-A-4.276.322 *discloses a hard temper fat, which comprises a first cocoa butter compatible fat, for example PMF, and* a *second SOS*/*POS fat. The SOS*/ *POS fats contain from 80-98* % *of SOS and POS, less than 10% of SES and less than 5% of each of PES, PEP. The content* of *the latter is to be limited as they have detrimental effects on the physical properties of the fat composition. The second fat can be a natural fat, which from their nature are substantially free of trans fatty acids. The second fat may also be synthesized starting from natural fats, for example by subjecting a random mixture of dipalmityl*, *distearyl and palmityl 1,3-diglycerides to an interesterification reaction in the absence of hydrogen; by subjecting hydrogenated palmoil to* a *reaction with glycerol and by subjecting the thus obtained diglyceride which consists for 99.7 wt. % of palmitic, stearic and oleic acid to an esterification reaction with anhydride in the absence of hydrogen; by isomerising diglycerides by heating them to a specific temperature in the absence of hydrogen; by causing a glycidyl ester of a fatty acid to react with a free fatty acid in the presence of an onium salt, without supplying hydrogen. Neither D1 nor the prior art acknowledged by it discloses to subject a fat to a controlled hydrogenation to minimise the risk to saturation of unsaturated fatty acids, which is reflected by the difference in TFA:* Δ*IV ratio before and after hydrogenation, with the purpose of controlling hardness and heat resistance of the fat.*

US-A-5.690.985 *relates to a fat blend for the manufacture of margarine and spreads, which contains an amount of a triglyceride having a trans fatty acid at the 2-position, with the purpose of accelerating the crystallization of the margarine fats from a super-cooled melt. From the SFC profile it appears that the solid fat content at 10°C is only between 20-40%, and thus that the fat compositions are too soft to be suitable for use in tempered confectionery products. In* US-A-5.690.985 *tempering is carried out to achieve crystallization from a super-cooled melt to achieve fast crystallization of the fat into the beta-prime form, but not to promote crystallization of the fat in the beta crystal form as this would cause sandiness. In confectionery products, crystallization of the fat into the beta-prime form is to be minimized, as this is the less stable crystal form which re-crystallizes to give the beta crystal form. This re-crystallization involves blooming.*

It has now been found that hardness and heat resistance of a tempering fat composition may be improved by incorporating into the tempering fat composition, an amount of a partially hydrogenated first fat, which first fat
- *Contains at least 5 wt. % of S₂E, preferably at least 10 wt. %, most preferably at least 13 wt. %, bu**t no more than 60 wt.** % and*
- *Contains at least 50 wt. % of S₂U*, *preferably at least 60 wt. %, more preferably at least 65 wt. %, **but no more than 99 wt.**%* - *Has a TFA* Δ*IV ratio of at least 2, preferably at least 2.5, more preferably at least 3, in which TFA is the amount of unsaturated fatty acids in the trans configuration present in the partially hydrogenated first fat in wt. % and* Δ*IV is*
*- the difference in iodine value of the first fat before hydrogenation and after hydrogenation,*
   *in which S is a saturated fatty acid having 10-24 carbon atoms, U is a mono- or polyunsaturated fatty acid having 18-22 carbon atoms and*
   E designates trans-iso-oleic acid, the majority of it being elaidic acid. Elaidic acid is a trans oleic acid in which the double bond is located at the C9 carbon atom. Other isomers exist in which the double bond is located on the C6 or C11. The trans fatty acid content will in general reflect the total content of fatty acids having the trans configuration, i.e. mono unsaturated as well as di- unsaturated fatty acids. S is a saturated fatty acid having 10-24 carbon atoms and U is a mono- or polyunsaturated fatty acid having 18-22 carbon atoms.

With a tempering fat composition is meant a fat that needs to be subjected to a thermal treatment, in particular to a cooling and heating programme which is adapted to the nature of the fat, so as to promote crystallisation of the fat in a stable crystalline form. In particular within the scope of the present invention a tempering fat composition is understood to be a fat composition of which the solid fat content measured at 30°C with IUPAC method 2.150 a, the fat composition not being subjected to a thermal treatment, differs at least 8% absolute from the solid fat content measured at the same temperature with IUPAC method 2.150b, the fat composition this time being subjected to the thermal treatment programme described in that method.

The tempering fat composition of this invention containing an amount of the above described first fat is a vegetable fat suitable for use as cocoa butter replacement fat, for example fats obtained by fractionation of natural palm oil, shea fat, or mango butter, or a fat like illipe butter etc. or a combination of these fats. These fats are rich in the SUS component and will thus need tempering to avoid the effect of blooming. The observation that incorporation of this first fat involves a hardening effect and a better heat resistance is surprising in view of the teaching of GB-A-1.349.846. This effect has surprisingly been found for a fat composition containing an amount of a partially hydrogenated first fat having the above described composition and having a TFA:ΔIV ratio of at least 2, preferably at least 2.5, more preferably at least 3. This means that, in contrast with GB 1 349 846, in this hydrogenation formation of trans fatty acids is aimed at, while getting minimal saturation of unsaturated fatty acids.

This is surprising in view of the teaching of GB-A-1.349.846 that due to the incompatibility of trans fatty acids containing triglycerides with cocoa butter, mixtures of such fats will show eutectic effects leading to a softening of the composition and involve changes in the polymorphic crystallisation properties, for which reason the content of the trans fatty acid containing triglycerides should remain below 5 wt. %. Furthermore according to GB-A-1.349.846, triglycerides with more than one unsaturated fatty acid residue should be virtually absent in the non hydrogenated first fat, as they may give asymmetric disaturated glycerides upon hydrogenation, which hampers chocolate production.

It has further been found that the presence of the first fat allows improving hardness and heat resistance of not only the tempering fat composition but also of a confectionery product containing the tempering fat composition of this invention, even when the first fat contains di or tri-unsaturated triglycerides.

Incorporation of the above described first fat into the tempering fat composition of this invention, results in confectionery products with improved consumer properties, in particular regarding heat resistance and hardness. In this respect it has been observed that confectionery products containing the tempering fat composition of this invention show an improved heat resistance and snappiness, together with a reduced tendency to blooming, while providing good mouth feel and cool melting and minimising waxiness. The observation of a good mouth feel is also surprising in view of the teaching of GB-A-1.230.317 according to which fat compositions with a trans fatty acid content above 5 wt. %, have a less desirable taste and mouth feel when mixed with cocoa butter.

According to a preferred embodiment of the invention, the hydrogenated first fat contains S₂E and S₂U in a weight ratio S₂E/(100 - S₂U) of at least 0.5, preferably > 0.8 preferably > 1.5, as such fat compositions have a more pronounced effect on the hardness of the confectionery product in which they are incorporated. The amount of S₂E and S₂U is expressed in wt. %.

To allow optimising the hardness of the tempering fat composition of this invention, the first fat preferably contains about 10-60 wt. % of S₂E, more preferably about 13 - 60 wt. %, and about 60 - 99 wt. % of S₂U, more preferably 65 - 99 wt. %.

The tempering properties of the tempering fat composition of this invention may be improved by the additional incorporation of an amount of a second non-hydrogenated fat. Thereto the tempering fat composition of this invention preferably contains 1-100 wt. % of the above described first fat and 0-99 wt. % of a second fat. Preferably the tempering fat composition of this invention contains 5-60 wt. % of the partially hydrogenated first fat and 95 - 40 wt. % of the second fat. The second fat is preferably a non-hydrogenated tempering fat having a S₂U content of at least 50 wt. %. By adapting the first and second fat content, the tempering properties of the tempering fat composition of this invention may be adapted to the properties of the mixture that needs to be tempered.

The second fat is preferably a fat with a POP content of at least 20 wt. %, more preferably at least 30 wt. %. A particularly suitable fat for use as the second fat is a Palm Oil Mid Fraction, which typically has a POP content of at least 30 wt. %.

The first fat of this invention preferably has a Stabilised Solid Fat Content (SFC) at 30°C of > 45 %, preferably > 55 %, and at 35 °C of > 5 %, preferably > 10 %. Confectionery products containing a fat with a SFC in these ranges show an improved hardness and heat resistance while still maintaining a good mouth feel. Stabilised or tempered SFC of a fat means the solid fat content of a fat measured after ageing of the fat at 26°C for 40 hours.

Hydrogenation of the first fat composition is preferably continued until a drop in Iodine value of less than 10, preferably less than 5 is obtained as compared to the non-hydrogenated fat. This means in fact that in the process of the present invention a partial hardening of the first fat composition suffices to obtain a tempering fat composition with the desired hardening properties. Controlling the degree of hardening has been found a suitable means for improving the hardness and heat resistance of the fat composition while minimising waxiness.

To optimise the effect of increasing hardness and heat resistance it is preferred that the first fat of the tempering fat composition of this invention has a trans fatty acid content of at least 7 wt. %. This is in contrast to the prior art teaching in which it is explained that compatibility with cocoa butter requires that the trans-acid content should remain below 5 wt.%.

Furthermore, it is preferred that the first fat contains at least 20 wt. %, preferably at least 30 wt. %, most preferably more than 35 wt. % of C16 fatty acids.

The first and second fat may, independently of each other, be obtained from various sources and may for example be fats, fractions or mixtures of fats, fractions or a mixture of one or more fats and one or more fractions, selected from the group including palm oill, cocoa butter, mowrah butter, illipe butter, shea fat, sal fat, allanblackia fat, mango fat, kokum fat. The first or second fat or both may however also be synthesised for example through an enzymatic interesterification reaction, or one of them or both may be a combination of a natural fat and an enzymatically synthesised fat.

The present invention also relates to a confectionery product containing the above described tempering fat composition, and to the use of the above described tempering fat composition for the production of a confectionery product. Thereby, the confectionery product may be subjected to a tempering operation, if there is a risk that blooming would occur and this would affect the attractiveness to the consumer. However, if a possible blooming will not affect the attractiveness of the product to the consumer, the tempering operation may be dispensed with and the tempering fat composition may be used as such in the preparation of a confectionery product.

The present invention further relates to a process for producing a tempering fat composition. This process comprises the steps of subjecting a first vegetable fat containing at least 50 wt. % of a of S₂U triglyceride to a hydrogenation reaction in the presence of a hydrogenation catalyst so as to partially hydrogenate the fat, until a fat is obtained having a TFA: ΔIV ratio of at least 2, preferably at least 2.5, more preferably at least 3, and incorporating an amount of the thus hydrogenated first fat into the tempering fat composition.

TFA is the amount of unsaturated fatty acids in the trans configuration in the partially hydrogenated first fat in wt. %, ΔIV is the difference in iodine value of the fat before hydrogenation and after hydrogenation. Unsaturated fatty acids includes mono- as well as di-unsaturated fatty acids, S is a saturated fatty acid having 10-24 carbon atoms and U is a mono- or polyunsaturated fatty acid having 18-22 carbon atoms.

According to a preferred embodiment, hydrogenation of the first fat is carried out until a S₂E content of at least 5 wt. %, preferably at least 10 wt. %, most preferably at least 13 wt. % is obtained, and the weight ratio S₂E / (100 - S₂U) of at least 0.5, preferably >0.8, most preferably > 1.5. Whereby E is trans-iso-oleic acid, this being the majority of the trans fatty acids formed.

The hydrogenation reaction is carried out in the presence of the usual hydrogenation catalysts, such as for example a nickel, platinum or palladium catalyst, but preferably in the presence of a nickel catalyst, although other catalysts may be used. Preferred conditions for carrying out the hydrogenation reaction are the use of a sulfided nickel catalyst or a nickel catalyst in the presence of methionine as this promotes the formation of trans fatty acids.

It is further preferred to carry out the hydrogenation reaction at a temperature of between 175-225 °C, to improve the selectivity of the hydrogenation reaction towards trans-iso-oleic acid.

To allow achieving a tempering fat with optimum tempering properties, the process further comprises the step of incorporating into the tempering fat composition 1-100 wt. % of the partially hydrogenated first fat so as to improve hardness and heat resistance of the tempering fat composition and 99-0 wt. % of a non-hydrogenated second fat to improve the tempering properties.

The present invention is further elucidated in the following examples, which illustrate preferred embodiments of the invention.

### Example 1: Preparation of the first fat composition.

Two samples of a palm oil mid fraction (PMF1 and PMF2) and a sample of a cocoa butter equivalent fat composition (CBE) were subjected to a hydrogenation reaction on a Premex batch hydrogenation plant, in various reaction conditions, as outlined in table 2. The CBE was a mixture of Shea Stearin with PMF2 in a weight ratio of 30/70.

The composition and properties of PMF 1, PMF2 and CBE are listed in table 1 below.

PMF1 was subjected to a hydrogenation reaction, the reaction conditions of which are indicated as A in table 2. PMF2 was subjected to a hydrogenation reaction, respectively conditions B, C, D and G indicated in table 2 being applied. CBE was subjected to hydrogenation reaction conditions outlined as E in table 2. The hydrogenation reactions for sample A to F were carried out in the presence of a sulphided Ni-catalyst from Synetix, which was a trans-selective hydrogenation catalyst. For sample G a normal Ni-catalyst, which was not trans-selective, was used, but the same temperature and pressure conditions were applied as for samples A to E.

The properties of the hydrogenation reaction products are summarised in table 3 below.

**Table 1.**

| | PMF1 | PMF2 | CBE |
|---|---|---|---|
| IV. | 45,2 | 34,5 | 36,9 |
| POP | 33.1 | 55.8 | 39.7 |
| S2U | 69.3 | 91.7 | 90.4 |
| S3 | 0,9 | 1,4 | 1,8 |
| SU2+U3 | 23,9 | 5.8 | 7.0 |
| C 16-0 | 48,2 | 56.2 | 42,4 |
| C 18-0 | 4,6 | 5.9 | 20,6 |
| C 18-1 | 37,4 | 33.2 | 32 |
| C 18-2 | 7,7 | 3.2 | 3,3 |
| SFC- T 20°C (*) | 43.3 | 85, 7 | 75.3 |
| SFC- T 25°C | 5.9 | 74,6 | 61.2 |
| SFC- T 30°C | 0 | 39,9 | 39 |
| SFC- T 35°C | 0 | 0 | 1 |

| | | | |
|---|---|---|---|
| (*) SFC-T is the stabilised or tempered SFC of a fat, i.e. aged at 26°C during 40 hours | | | |

### Comparative example I.

A Double Fractionated Palmolein was hydrogenated on the same pilot plant. The hydrogenation conditions were the ones indicated as F in table 2. The product had a starting IV of 62.6.

The properties of the hydrogenated reaction product are summarised in table 3 below.

**Table 2.**

| Hydrogenation Conditions | A | B | C | D | E | F* | G |
|---|---|---|---|---|---|---|---|
| Amount of fat (Kg) | 1 ,5 | 1 ,5 | 1 ,5 | 1 ,5 | 1 ,5 | 1 ,5 | 1.5 |
| Catalyst- Type | Synetix 9908 | Synetix 9908 | Synetix 9908 | Synetix 9908 | Synetix 9908 | Synetix 9908 | Synetix 9910 |
| Catalyst Amount (%) | 0, 1 | 0, 1 | 0, 1 | 0, 1 | 0, 1 | 0,4 | 0.03 |
| Reaction- T (°C) | 200 | 200 | 200 | 200 | 200 | 180--> 200 | 200 |
| Reaction-P (Bar) | 0,2 | 0,2 | 0,2 | 0,2 | 0,2 | 0, 75 | 0.2 |
| Mixer speed (RPM) | 1000 | 1000 | 1000 | 1000 | 1000 | 1200 | 1000 |
| H2-consumption (L) | 2 | 0,25 | 1 | 2 | 1 | 14 | 3.25 |
| (*) Comparative example | | | | | | | |

**Table 3.**

| | A | B | C | D | E | F(*) | G |
|---|---|---|---|---|---|---|---|
| TFA(%). | 10.7 | 4,4 | 9,9 | 15,8 | 12,2 | 43.1 | 6.6 |
| IV | 43.5 | 33.8 | 33.5 | 32.95 | 33.6 | 51.0 | 31.7 |
| SFC- T 20°C | 54.8 | 87,4 | 89,3 | 93,4 | 78,9 | 71.1 | 90.6 |
| SFC- T 30°C | 28.0 | 55, 7 | 65,8 | 84,3 | 64,5 | 57.4 | 67.2 |
| SFC- T 35°C | 10.8 | 12,2 | 31 ,6 | 58,7 | 32 | 33.5 | 28.1 |
| S2U-content (%) | 76.4 | 93.5 | 94.8 | 97.3 | 93 | 27.0 | 89.9 |
| S2E-content (%) | 15.4 | 10.4 | 22.0 | 41.2 | 29.7 | >5 (**) | 14.1 |
| S2E/(100-S2U) | 0.65 | 1.60 | 4.23 | 15.26 | 4.24 | - | 1.4 |
| ratio TFA/ΔIV | 6.3 | 6.3 | 9.9 | 10.2 | 3.7 | 3.7 | 2.4 |

| | | | | | | | |
|---|---|---|---|---|---|---|---|
| (*) Samples A, B, C, D, E and G represent the first fat composition of the tempering fat composition of this invention. Sample F corresponds to comparative example I. (**)The sum of MEP,PESt and St2E = 7.3%. P₂E was not determined (M = Myrisitic acid) | | | | | | | |

### Example 2: Preparation of a tempering fat composition.

A tempering fat composition according to the invention was prepared by mixing a first fat composition prepared according to samples A - E or G of Example 1, with a second fat composition.

As a second fat composition, use was made of the PMF 2 fat of table 1. This fat is non-hydrogenated, contains a high amount of SUS and is rich in POP and is a typical high grade PMF, which can be used for the production of cocoa butter equivalents.

The thus obtained tempering fat composition was incorporated into a confectionery coating composition, prepared according to the recipe of table 4:

**Table 4.**

| **Coating Recipe** | % |
|---|---|
| Fat | 29,2 |
| Sugar | 44,7 |
| Cocoapowder 10/12 | 20,6 |
| Cocoa Mass | 5,1 |
| Lecithine | 0,4 |
| Vanilline | 0,05 |

As a reference coating (Blend Ref) use was made of a tempering fat composition containing only the second fat composition, i.e. 100% PMF 2.

### Comparative example II.

A tempering fat composition was prepared by mixing a first fat composition prepared according to sample F of Example 1, with the PMF 2 fat of table 1 as the second fat composition, similar to example 2.

The thus obtained tempering fat composition was incorporated into a confectionery coating composition, prepared according to example 2.

### Example 3.

A confectionery coating was prepared as described in Example 2. The following tempering fat compositions were used:
1. Blend Ref: 100% PMF2
2. Blend 1 : 85 wt. % PMF2 + 15 wt. % sample C
3. Blend 2 : 70 wt. % PMF2 + 30 wt. % sample C

Sample C is a fat composition obtained by hydrogenating PMF2 in the presence of a trans selective catalyst. Sample C is characterised by a trans fatty acid content of 9.9%, a S₂E-content of 22.0 wt. % and an SFC- T value at 30°C of 65.8% and at 35°C of 31.6%.

The coating mixture was tempered by adding 0.3 wt. % of a temper seed Chocoseed A at a temperature of 27°C (Chocoseed A is a product of Fuji Oil containing 40 % of SUS-triglyceride, crystallised in the Beta-form). After tempering, the chocolate was formed into tablets, which were cooled at a temperature of 5°C for 30' minutes followed by 30' at a temperature of 15°C. After de-moulding, the tablets were allowed to stabilise by storing them at 20°C for 1 week.

After the stabilisation had been terminated, the tablets were stored in an incubator at temperatures of respectively 20, 25 and 28°C for 2 hours. Thereafter, the hardness of each tablet was measured with a SMS-texture meter with a metal probe of a diameter of 3 mm. The results are summarised in Table 5 (expressed as force (g)).

**Table 5.**

| | Blend Ref | Blend 1 | Blend 2 |
|---|---|---|---|
| 20°C | 5702 | 6274 | 6423 |
| 25°C | 1583 | 2123 | 2450 |
| 28°C | 228 | 522 | 724 |

The heat resistance of the tablets was tested by touching the tablets at room temperature by hand. The following observations were made:
1. Blend Ref : clear fingerprints
2. Blend 1 : almost no fingerprints
3. Blend 2: no fingerprints

The resistance towards blooming and the gloss retention, which give an indication on the long term heat resistance, were evaluated after storing the tablets for several weeks at 28°C. The results are summarised in table 6.

**Table 6.**

| Time at 28°C | Blend Ref | | Blend 1 | | Blend 2 | |
|---|---|---|---|---|---|---|
| | gloss | fatbloom | gloss | fatbloom | gloss | fatbloom |
| 1 week | +/- | no | ok | no | ok | no |
| 3 weeks | +/- | +/- | ok | no | ok | no |
| 4 weeks | +/- | + | ok | no | ok | no |
| 5 weeks | +/- | ++ | +/- | + | +/- | +/- |
| 7 weeks | no | +++ | +/- | +++ | +/- | + |
| 10 weeks | no | ++++ | no | ++++ | +/- | ++ |
| 13 weeks | no | ++++ | no | ++++ | +/- | +++ |

| | | | | | | |
|---|---|---|---|---|---|---|
| score for fat bloom: no bloom → ++++ (= complete bloom) | | | | | | |

The tablets were also evaluated by a test panel for mouthfeel, cool melting (cooling sensation when eating it), snappyness and waxyness, by tasting the samples at room temperature. The members of the taste panel were asked to give a score from 1 to 4: 1 indicating that the characteristic was very weak, 4 meaning very strong. The individual results of the taste session were averaged and gave following scores :

**Table 7.**

| | Blend Ref | Blend 1 | Blend 2 |
|---|---|---|---|
| mouth feel | 3,14 | 2,92 | 3 |
| cool melting | 2,86 | 2,82 | 2,13 |
| snappyness | 2,71 | 2,96 | 3,13 |
| waxyness | 1,43 | 1,42 | 1,25 |

From the results of the tests summarised in table 5-7 it can be concluded that the addition of 15 wt. %, respectively 30 wt. % of fat sample C to the PMF2-fat resulted in:
- an increased hardness in the temperature range of between 20 - 28°C
- a better heat resistance which is reflected by the observed increased hardness at 28°C, decrease or absence of fingerprints, a better stability of the product when stored for several weeks at 28°C
- no drawbacks on mouth feel (cool mouthfeel, no waxiness)

As has been explained, the beneficial effect of the addition of trans-hydrogenated PMF2 to PMF2 is unexpected, taking into account the state of the art discussed in the description.

### Example 4.

A confectionery coating was prepared according to recipe of table 4, making use of a tempering fat composition Blend 3 which contained 75 wt. % PMF2 + 25 wt. % sample A. The properties of this chocolate composition were compared with a coating made with Blend Ref. The following results for hardness and fat blooming after storage at 28°C were obtained:

**Table 8.**

| | 20°C | Hardness 25°C | 28°C | 1 week | 3 weeks | Fatbloom 4 weeks | after storage 5 weeks | at 28°C 7 weeks | 10 weeks |
|---|---|---|---|---|---|---|---|---|---|
| Blend Ref Blend 3 | 5702 | 1583 | 228 | no | +/- | + | ++ | +++ | ++++ |
| | 4722 | 1345 | 301 | no | no | no | + | + | ++ |

The confectionery coating mixture obtained by incorporating blend 3 into the recipe of table 4 was tasted and was found to have good mouth feel, with virtually no waxyness. The addition of 25 wt. % of a first fat composition of sample A improved the hardness at 28°C and the stability of the product when stored at 28°C.

When comparing the present example with example 1 where the fat composition of sample C was used, it becomes clear that the effect on hardness of the fat composition of sample A is lower. Apparently this is linked to the fact that the ratio S2E/(100-S2U) is lower for A (0.65) compared to C (4.23).

### Example 5.

A coating was made according to recipe in table 4 with
Blend 4 : 60% PMF2 + 40% sample B
Blend 5 : 90% PMF2 + 10% sample D
Blend 15 : 85% PMF2 + 15% sample F.
Blend 15 is a comparative example.

Tablets made according to the recipe of table 4, were evaluated as follows with respect to hardness:

**Table 9.**

| | Hardness | | |
|---|---|---|---|
| | 20°C | 25°C | 28°C |
| Blend Ref | 5702 | 1583 | 228 |
| Blend 4 | 5935 | 1964 | 351 |
| Blend 5 | 6255 | 2069 | 489 |
| Blend 15 | 5405 | 2236 | 47 |

The tablets were tasted by a taste panel and found to have a good mouth feel without any waxyness. Again the improved hardness is demonstrated after adding trans-hydrogenated PMF2 in blends 4 & 5. Especially the increased hardness at 28°C is important, indicating an increased heat resistance of the new product. This was not the case for blend 15. This example illustrates that fat compositions having a high S₂E-content and the higher trans fatty acid content associated therewith as well as a higher S₂E/(100-S₂U) ratio, perform better than those with a lower S₂E-content. The S₂E content of sample D is about 4 times higher than the S₂E content of sample B. Therefore in blend 4, the amount of the hydrogenated component used is four times higher than the amount used in blend 5. Despite this higher dosage, sample D clearly has a more important effect on hardness than sample B.

### Example 6.

A coating was prepared according to recipe given in table 4, using blend 6 : 70% PMF2 + 30% sample E. The hardness of tablets made thereof was measured at 3 different temperatures, after 1 week of stabilisation. The results indicated in table 10 were obtained.

### Comparative example III.

A coating was prepared according to recipe given in table 4, using Blend 7: 70% PMF2 + 30% CBE (cf table 1). The hardness of tablets made thereof was measured at 3 different temperatures, after 1 week of stabilisation. The results indicated in table 10 were obtained.

**Table 10.**

| | Hardness | | |
|---|---|---|---|
| | 20°C | 25°C | 28°C |
| Blend 6 | 6814 | 2221 | 591 |
| Blend 7 | 5408 | 1695 | 235 |

Comparison of example 6 with comparative example III learns that addition of an amount of slightly trans-hydrogenated CBE to the PMF2 composition implies a better hardness to the composition than the non-hydrogenated CBE. When touched by hand, blend 7 showed quick melting, which was not the case for the sample made with blend 6. Both samples were tasted and found to give good mouthfeel and no waxyness.

### Comparative example IV.

Coatings were made according to the following recipe:

**Table 12.**

| **Coating Recipe** | % |
|---|---|
| Fat | 15,7 |
| Sugar | 48,1 |
| Cocoapowder 10/12 | 0 |
| Cocoa Mass | 35,8 |
| Lecithine | 0,4 |
| Vanilline | 0,02 |

In a first comparative test with this recipe with high cocoa butter content, the following blends were compared with each other:
- Blend 9: 100% CBE (cf table 1)
- Blend 10 : 85% CBE + 15% PMF2

Tablets were made and their hardness was measured at 3 different temperatures, after 1 week of stabilisation. The results are summarised in table 12.

### Example 7.

A coating was made according to the recipe of table 12. In this recipe with high cocoa butter content, the following blend was used:
Blend 11 : 85% CBE + 15% sample C.

Tablets were made and their hardness was measured at 3 different temperatures, after 1 week of stabilisation. The results are summarised in table 13.

**Table 13.**

| | Hardness | | |
|---|---|---|---|
| | 20°C | 25°C | 28°C |
| Blend 9 | 6076 | 2867 | 982 |
| Blend 10 | 4717 | 2224 | 632 |
| Blend 11 | 5867 | 2965 | 969 |

All tablets, tablets of comparative example IV as well as example 7 were tasted and found to have a good mouth feel without any waxyness. These examples learn that replacing part of the CBE by a PMF (which involves reducing StOSt-content and increasing POP-content) leads to a softer coating. Replace the same amount of CBE by slightly trans-hydrogenated PMF, allows maintaining the same hardness, without adversely affecting mouthfeel.

### Comparative example V.

A coating was made according to recipe in table 12, using Blend 12: 100% PMF2. Tablets were made and the hardness was measured at 3 different temperatures, after 1 week stabilisation. The results are summarised in table 14 below.

### Example 8.

A coating was made according to recipe in table 12 with following blends :
Blend 13 : 85% PMF2 + 15% sample C, according to the invention
Blend 14 : 80% PMF2 + 20% sample D, according to the invention

Tablets were made and the hardness was measured at 3 different temperatures, after 1 week stabilisation. The following results were obtained :

**Table 14.**

| | Hardness | | |
|---|---|---|---|
| | 20°C | 25°C | 28°C |
| Blend 12 | 4400 | 2017 | 546 |
| Blend 13 | 5981 | 2458 | 628 |
| Blend 14 | 6172 | 2409 | 810 |

A comparison of the results of example 8 and comparative example V learns that addition of slightly hydrogenated PMF2 allows improving the hardness of the tablets over the whole temperature range. Especially the relative increase at 28°C is important, indicating a clear improvement in heat resistance.

### Example 9.

A coating was prepared according to the recipe of table 4, thereby making use of the following blends:
- Blend 15: 85 wt. % of PMF2 + 15 wt. % of sample G.
- Blend Ref consisting of 100% PMF2,

Tablets were made and the hardness of the tablets was measured at three different temperatures, after stabilisation for one week. The results are summarised in table 15 below.

**Table 15.**

| | 20°C | Hardness 25°C | 28°C |
|---|---|---|---|
| Blend Reference | 5702 | 1583 | 228 |
| Blend 15 | 5863 | 1767 | 351 |

### Comparative example VI.

A double fractionated palm olein was hydrogenated on a pilot plant in the presence of a hydrogenation catalyst Synetix 9908, until a product was obtained with an iodine value IV of 54.8.

A rapeseed oil was hydrogenated in the same way until an IV of 74.2 was obtained.

A blend was made containing 75 wt. % of the hydrogenated palm olein and 25 wt. % of the hydrogenated rapeseed oil.

The SFC of the blend was measured both with the IUPAC method 2.150a and 2.150b, respectively without and with stabilisation. The SFC at 30°C of the blend without stabilisation was 29.5 %, the SFC of the blend after having been stabilised was 34.5%, thus a difference of 5% absolute.

With this blend, coating compositions were prepared according to the recipe of table 4. From this coating mixture, tablets were moulded at 45°C, cooled for 30' at 5°C, followed by 30' at 15°C, following which the tablets were demoulded. No tempering was applied. After 1 week of stabilisation at 20°C, the tablets were stored in an incubator at 25°C. There was no sign of blooming after 8 weeks at 25°C.

### Example 10.

A palm mid fraction with an iodine value of 42.6 was hydrogenated on a pilot plant in the presence of a hydrogenation catalyst Synetix 9908, until a product was obtained with an iodine value IV of 38.3. A blend was made containing (1) 75 wt. % of this hydrogenated palm mid fraction and (2) 25 wt. % of the PMF2 given in table 1.

The SFC of the blend was measured both with the IUPAC method 2.150a and 2.150b, respectively without and with stabilisation. The SFC at 30°C of the blend without stabilisation was 21.2 %, the SFC of the blend after having been stabilised was 32.9%, thus a difference of 11.7% absolute.

With this blend, a coating composition was prepared according to the recipe of table 4. From this coating composition, two sets of tablets were made. A first set of tablets was made according to the procedure of example 3, including tempering. A second set of tablets was made as described in comparative example VI, i.e. without tempering.

After 1 week of stabilisation at 20°C, the tempered and non-tempered tablets were stored in an incubator at 25°C. The tempered tablets did not show any sign of blooming after 1 week, whereas the non-tempered tablets were completely bloomed.

## Claims

1. A tempering fat composition for confectionery products, **characterised in that** the tempering fat composition contains an amount of a partially hydrogenated first fat, the first fat
- Containing at least 5 wt. % of S₂E, preferably at least 10 wt. %, most preferably at least 13 wt. %, **but no more than 60 wt.** % and Containing at least 50 wt. % of S₂U, preferably at least 60 wt. %, more preferably at least 65 wt. %, **but no more than 99 wt.** %
- Having a TFA: ΔIV ratio of at least 2, preferably at least 2.5, more preferably at least 3, in which TFA is the amount of unsaturated fatty acids in the trans configuration present in the partially hydrogenated first fat in wt. % and ΔIV is the difference in iodine value of the first fat before hydrogenation and after hydrogenation,
in which E is trans-iso-oleic acid, S is a saturated fatty acid having 10-24 carbon atoms and U is a mono- or polyunsaturated fatty acid having 18-22 carbon atoms.

2. A tempering fat composition as claimed in claim 1, **characterised in that** the hydrogenated first fat contains S₂E and S₂U in a weight ratio S₂E/(100 - S₂U) of at least 0.5, preferably > 0.8, more preferably > 1.5.

3. A tempering fat composition as claimed in any one of claims 1-2, **characterised in that** the composition contains 1-100 wt. %, preferably 5-60 wt. % of the hydrogenated first fat and 99-0 wt. %, preferably 95 - 40 wt. % of a non-hydrogenated second fat.

4. A tempering fat composition as claimed in claim 3, **characterised in that** the non-hydrogenated second fat has a S₂U content of at least 50 wt. %.

5. A tempering fat composition as claimed in any one of claims 1-4, **characterised in that** the hydrogenated first fat has a Stabilised Solid Fat Content at 30°C of > 45 %, preferably > 55 %, and at 35 °C of > 5 %, preferably > 10 %.

6. A tempering fat composition as claimed in any one of claims 1-5, **characterised in that** the difference between the Iodine Value of the hydrogenated first fat and the first fat before hydrogenation is less than 10, preferably less than 5.

7. A tempering fat composition as claimed in any one of claims 1-6, **characterised in that** the content of fatty acids with a trans configuration in the hydrogenated first fat is at least 7%.

8. A tempering fat composition as claimed in any one of claims 3-7, **characterised in that** the non-hydrogenated second fat contains at least 20 wt. % of POP, preferably at least 30 wt. % of POP, in which P = Palmitic Acid and O = Oleic acid.

9. A tempering fat composition as claimed in any one of claims 1-8, **characterised in that** the hydrogenated first fat is a fat obtained through hydrogenation of a fat composition selected from the group of cocoa butter, mowrah butter, palm oil, illipe butter, shea fat, sal fat, allanblackia fat, mango fat, kokum fat, or a combination of such fats, a fraction of such fats or a combination thereof.

10. A tempering fat composition as claimed in any one of claims 3-9, **characterised in that** the first fat, the second fat or both the first and second fat comprise an amount of a fat obtained through an enzymatic interesterification reaction.

11. A tempering fat composition as claimed in any one of claims 3-10, **characterised in that** the non-hydrogenated second fat is a fat selected from the group of cocoa butter, mowrah butter, palm oil, illipe butter, shea fat, sal fat, allanblackia fat, mango fat, kokum fat or a combination of such fats, a fraction of such fats or a combination thereof.

12. A confectionery product containing the tempering fat composition as claimed in any one of claims 1-11.

13. Use of the tempering fat composition of any one of claims 1-11 for the production of confectionery products.

14. Use as claimed in claim 13, **characterised in that** the confectionery product is subjected to a tempering step.

15. Use as claimed in claim 13, **characterised in that** the confectionery product is not subjected to a tempering step.

16. A process for producing a tempering vegetable fat composition, the process comprising the steps of subjecting a first vegetable fat containing at least 50 wt. %, preferably at least 60 wt. %, more preferably at least 65 wt. % of a of S₂U triglyceride to a hydrogenation reaction in the presence of a hydrogenation catalyst to partially hydrogenate the fat, with the aim of obtaining a fat having a TFA: ΔIV ratio of at least 2, preferably at least 2.5, more preferably at least 3, in which TFA is the total amount of unsaturated fatty acids in the trans configuration in the partially hydrogenated first fat in wt. %, and ΔIV is the difference in iodine value of the fat before hydrogenation and after hydrogenation, in which S is a saturated fatty acid having 10-24 carbon atoms and U is a mono- or polyunsaturated fatty acid having 18-22 carbon atoms and incorporating an amount of the first fat into the tempering fat composition.

17. A process as claimed in claim 16, **characterised in that** the first fat is hydrogenated until it has a S₂E content of at least 5 wt. %, preferably at least 10 wt. %, most preferably at least 13 wt. %, and the weight ratio S₂E / (100 - S₂U) > 0.5, preferably >0.8, most preferably > 1.5, in which E is trans-iso-oleic acid.

18. A process as claimed in claim 16 or 17, **characterised in that** as a catalyst use is made of a nickel, platinum or palladium catalyst, preferably a nickel catalyst.

19. A process as claimed in any one of claims 16-18, **characterised in that** the hydrogenation is carried out in the presence of a sulfided nickel catalyst or a nickel catalyst in the presence of methionine.

20. A process as claimed in any one of claims 16-19, **characterised in that** the hydrogenation reaction is carried out at a temperature of between 175-225 °C.

21. A process as claimed in any one of claims 16-20, **characterised in that** the process comprises the steps of incorporating into the tempering fat composition 1-100 wt. % of the hydrogenated first fat and 99-0 wt. % of a non-hydrogenated second fat.

## Patentansprüche

1. Temperierfettzusammensetzung für Konfektprodukte, **dadurch gekennzeichnet, dass** die Temperierfettzusammensetzung eine Menge eines teilweise gehärteten ersten Fettes enthält, wobei das erste Fett
- mindestens 5 Gew.-% von S₂E enthält, vorzugsweise mindestens 10 Gew.-%, am stärksten bevorzugt mindestens 13 Gew.-%, jedoch nicht mehr als 60 Gew.-%, und
- mindestens 50 Gew.-% von S₂U enthält, vorzugsweise mindestens 60 Gew.-%, stärker bevorzugt mindestens 65 Gew.-%, jedoch nicht mehr als 99 Gew.-%,
- ein Verhältnis TFA:ΔIV von mindestens 2, vorzugsweise von mindestens 2,5, stärker bevorzugt von mindestens 3 aufweist, wobei TFA die Menge ungesättigter Fettsäuren in der trans-Konfiguration ist, die in dem teilweise gehärteten ersten Fett in Gew.-% vorhanden ist, und ΔIV die Differenz der Jodwerte des ersten Fettes vor der Härtung und nach der Härtung ist,
wobei E trans-Isoölsäure ist, S eine gesättigte Fettsäure mit 10-24 Kohlenstoffatomen ist und U eine mono- oder polyungesättigte Fettsäure mit 18-22 Kohlenstoffatomen ist.

2. Temperierfettzusammensetzung nach Anspruch 1, **dadurch gekennzeichnet, dass** das gehärtete erste Fett S₂E und S₂U in einem Gewichtsverhältnis S₂E/(100 - S₂U) von mindestens 0,5, vorzugsweise > 0,8, stärker bevorzugt > 1,5 enthält.

3. Temperierfettzusammensetzung nach einem der Ansprüche 1-2, **dadurch gekennzeichnet, dass** die Zusammensetzung 1-100 Gew.-%, vorzugsweise 5-60 Gew.-% des gehärteten ersten Fettes und 99-0 Gew.-%, vorzugsweise 95-40 Gew.-% eines ungehärteten zweiten Fettes enthält.

4. Temperierfettzusammensetzung nach Anspruch 3, **dadurch gekennzeichnet, dass** das ungehärtete zweite Fett einen S₂U-Gehalt von mindestens 50 Gew.-% aufweist.

5. Temperierfettzusammensetzung nach einem der Ansprüche 1-4, **dadurch gekennzeichnet, dass** das gehärtete erste Fett einen stabilisierten Festfettanteil bei 30 °C von > 45 %, vorzugsweise > 55 %, und bei 35 °C von > 5 %, vorzugsweise > 10 % aufweist.

6. Temperierfettzusammensetzung nach einem der Ansprüche 1-5, **dadurch gekennzeichnet, dass** die Differenz zwischen dem Jodwert des gehärteten ersten Fettes und des ersten Fettes vor Härtung kleiner als 10, vorzugsweise kleiner als 5 ist.

7. Temperierfettzusammensetzung nach einem der Ansprüche 1-6, **dadurch gekennzeichnet, dass** der Gehalt an Fettsäuren mit einer trans-Konfiguration in dem gehärteten ersten Fett mindestens 7 % beträgt.

8. Temperierfettzusammensetzung nach einem der Ansprüche 3-7, **dadurch gekennzeichnet, dass** das ungehärtete zweite Fett mindestens 20 Gew.-% von POP, vorzugsweise mindestens 30 Gew.-% von POP enthält, wobei P = Palmitinsäure und O = Ölsäure.

9. Temperierfettzusammensetzung nach einem der Ansprüche 1-8, **dadurch gekennzeichnet, dass** das gehärtete erste Fett ein Fett ist, das durch Härtung einer Fettzusammensetzung hergestellt wird, die ausgewählt ist aus der Gruppe von Kakaobutter, Mowrahbutter, Palmöl, Illipebutter, Sheafett, Salfett, Allanblackiafett, Mangofett, Kokumfett oder einer Kombination solcher Fette, einer Fraktion solcher Fette oder einer Kombination davon.

10. Temperierfettzusammensetzung nach einem der Ansprüche 3-9, **dadurch gekennzeichnet, dass** das erste Fett, dass zweite Fett oder sowohl das erste als auch das zweite Fett eine Menge eines Fettes umfassen, das durch eine enzymatische Interesterifizierungsreaktion hergestellt wird.

11. Temperierfettzusammensetzung nach einem der Ansprüche 3-10, **dadurch gekennzeichnet, dass** das ungehärtete zweite Fett ein Fett ist, das ausgewählt ist aus der Gruppe von Kakaobutter, Mowrahbutter, Palmöl, Illipebutter, Sheafett, Salfett, Allanblackiafett, Mangofett, Kokumfett oder einer Kombination solcher Fette, einer Fraktion solcher Fette oder einer Kombination davon.

12. Konfektprodukt, welches die Temperierfettzusammensetzung nach einem der Ansprüche 1-11 enthält.

13. Verwendung der Temperierfettzusammensetzung nach einem der Ansprüche 1-11 zur Produktion von Konfektprodukten.

14. Verwendung nach Anspruch 13, **dadurch gekennzeichnet, dass** das Konfektprodukt einem Temperierschritt unterzogen wird.

15. Verwendung nach Anspruch 13, **dadurch gekennzeichnet, dass** das Konfektprodukt keinem Temperierschritt unterzogen wird.

16. Verfahren zur Herstellung einer Temperier-Pflanzenfettzusammensetzung, wobei das Verfahren die Schritte umfasst: Unterziehen eines ersten Pflanzenfettes, das mindestens 50 Gew.-%, vorzugsweise mindestens 60 Gew.-%, stärker bevorzugt mindestens 65 Gew.-% eines S₂U-Triglycerids enthält, einer Härtungsreaktion in Gegenwart eines Härtungskatalysators, um das Fett teilweise zu härten, mit dem Ziel, ein Fett herzustellen, das ein Verhältnis TFA:ΔIV von mindestens 2, vorzugsweise von mindestens 2,5, stärker bevorzugt von mindestens 3 aufweist, wobei TFA die Gesamtmenge ungesättigter Fettsäuren in der trans-Konfiguration in dem teilweise gehärteten ersten Fett in Gew.-% ist und ΔIV die Differenz der Jodwerte des Fettes vor der Härtung und nach der Härtung ist, wobei S eine gesättigte Fettsäure mit 10-24 Kohlenstoffatomen ist und U eine mono- oder polyungesättigte Fettsäure mit 18-22 Kohlenstoffatomen ist, und Aufnehmen einer Menge des ersten Fettes in die Temperierfettzusammensetzung.

17. Verfahren nach Anspruch 16, **dadurch gekennzeichnet, dass** das erste Fett gehärtet wird, bis es einen S₂E-Gehalt von mindestens 5 Gew.-%, vorzugsweise mindestens 10 Gew.-%, am stärksten bevorzugt mindestens 13 Gew.-%, und das Gewichtsverhältnis S₂E/(100 - S₂U) > 0,5, vorzugsweise > 0,8, am stärksten bevorzugt > 1,5 aufweist, wobei E trans-Isoölsäure ist.

18. Verfahren nach Anspruch 16 oder 17, **dadurch gekennzeichnet, dass** als Katalysator ein Nickel-, Platin- oder Palladium-Katalysator verwendet wird, vorzugsweise ein Nickel-Katalysator.

19. Verfahren nach einem der Ansprüche 16-18, **dadurch gekennzeichnet, dass** die Härtung in Gegenwart eines sulfidierten Nickel-Katalysators oder eines Nickel-Katalysators in Gegenwart von Methionin durchgeführt wird.

20. Verfahren nach einem der Ansprüche 16-19, **dadurch gekennzeichnet, dass** die Härtungsreaktion bei einer Temperatur zwischen 175 und 225 °C durchgeführt wird.

21. Verfahren nach einem der Ansprüche 16-20, **dadurch gekennzeichnet, dass** das Verfahren die Schritte des Aufnehmens von 1-100 Gew.-% des gehärteten ersten Fettes und 99-0 Gew.-% eines ungehärteten zweiten Fettes in die Temperierfettzusammensetzung umfasst.

## Revendications

1. Composition de tempérage à base de graisses pour produits de confiserie, **caractérisée en ce que** la composition de tempérage à base de graisses contient une quantité d'une première graisse partiellement hydrogénée, la première graisse
- contenant au moins 5 % en poids de S₂E, de préférence au moins 10 % en poids, idéalement au moins 13 % en poids, mais pas plus de 60 % en poids et
- contenant au moins 50 % en poids de S₂U, de préférence au moins 60 % en poids, mieux encore au moins 65 % en poids, mais pas plus de 99 % en poids
- ayant un rapport acide gras trans (TFA) : ΔIV d'au moins 2, de préférence d'au moins 2,5, mieux encore d'au moins 3, TFA représentant la quantité d'acides gras insaturés dans la configuration trans présente dans la première graisse partiellement hydrogénée en % en poids et ΔIV représentant la différence d'indice iode de la première graisse avant hydrogénation et après hydrogénation,
E représentant de l'acide iso-oléique trans, S représentant un acide gras saturé ayant de 10 - 24 atomes de carbone et U représentant un acide gras mono ou polyinsaturé ayant de 18 - 22 atomes de carbone.

2. Composition de tempérage à base de graisses telle que revendiquée dans la revendication 1, **caractérisée en ce que** la première graisse hydrogénée contient S₂E et S₂U dans un rapport pondéral S₂E/(100 - S₂U) d'au moins 0,5, de préférence > 0,8, mieux encore > 1,5.

3. Composition de tempérage à base de graisses telle que revendiquée dans l'une quelconque des revendications 1 - 2, **caractérisée en ce que** la composition contient de 1 - 100 % en poids, de préférence de 5 - 60 % en poids de la première graisse hydrogénée et de 99 - 0 % en poids, de préférence de 95 - 40 % en poids d'une deuxième graisse non hydrogénée.

4. Composition de tempérage à base de graisses telle que revendiquée dans la revendication 3, **caractérisée en ce que** la deuxième graisse non hydrogénée a une teneur en S₂U d'au moins 50 % en poids.

5. Composition de tempérage à base de graisses telle que revendiquée dans l'une quelconque des revendications 1 - 4, **caractérisée en ce que** la première graisse hydrogénée a une teneur en graisses solides stabilisées à 30 °C de > 45 %, de préférence > 55 %, et à 35 °C de > 5 %, de préférence > 10 %.

6. Composition de tempérage à base de graisses telle que revendiquée dans l'une quelconque des revendications 1 - 5, **caractérisée en ce que** la différence entre l'indice d'iode de la première graisse hydrogénée et de la première graisse avant hydrogénation est inférieur à 10, de préférence inférieur à 5.

7. Composition de tempérage à base de graisses telle que revendiquée dans l'une quelconque des revendications 1 - 6, **caractérisée en ce que** la teneur en acides gras avec une configuration trans dans la première graisse hydrogénée est d'au moins 7 %.

8. Composition de tempérage à base de graisses telle que revendiquée dans l'une quelconque des revendications 3 - 7, **caractérisée en ce que** la deuxième graisse non hydrogénée contient au moins 20 % en poids de POP, de préférence au moins 30 % en poids de POP, P représentant de l'acide palmitique et O de l'acide oléique.

9. Composition de tempérage à base de graisses telle que revendiquée dans l'une quelconque des revendications 1 - 8, **caractérisée en ce que** la première graisse hydrogénée est une graisse obtenue par hydrogénation d'une composition de graisses choisie dans le groupe consistant en beurre de cacao, beurre de mowrah, huile de palme, beurre d'illipé, beurre de karité, graisse de sal, graisse d'Allanblackia, graisse de mangue, graisse de Kokum ou une combinaison de ces graisses, une fraction de ces graisses ou une combinaison de celles-ci.

10. Composition de tempérage à base de graisses telle que revendiquée dans l'une quelconque des revendications 3 - 9, **caractérisée en ce que** la première graisse, la deuxième graisse ou les première et deuxième graisses comprennent une quantité d'une graisse obtenue par réaction d'interestérification enzymatique.

11. Composition de tempérage à base de graisses telle que revendiquée dans l'une quelconque des revendications 3 - 10, **caractérisée en ce que** la deuxième graisse non hydrogénée est une graisse choisie dans le groupe consistant en beurre de cacao, beurre de mowrah, huile de palme, beurre d'illipé, beurre de karité, graisse de sal, graisse d'Allanblackia, graisse de mangue, graisse de Kokum ou une combinaison de ces graisses, une fraction de ces graisses ou une combinaison de celles-ci.

12. Produit de confiserie contenant la composition de tempérage à base de graisses telle que revendiquée dans l'une quelconque des revendications 1 - 11.

13. Utilisation de la composition de tempérage à base de graisses de l'une quelconque des revendications 1 - 11 pour la production de produits de confiserie.

14. Utilisation telle que revendiquée dans la revendication 13, **caractérisée en ce que** le produit de confiserie est soumis à une étape de tempérage.

15. Utilisation telle que revendiquée dans la revendication 13, **caractérisée en ce que** le produit de confiserie n'est pas soumis à une étape de tempérage.

16. Procédé pour produire une composition de tempérage à base de graisses végétales, le procédé comprenant les étapes consistant à soumettre une première graisse végétale contenant au moins 50 % en poids, de préférence au moins 60 % en poids, mieux encore au moins 65 % en poids d'un triglycéride S₂U à une réaction d'hydrogénation en présence d'un catalyseur d'hydrogénation pour hydrogéner en partie la graisse dans le but d'obtenir une graisse ayant un rapport TFA : ΔIV d'au moins 2, de préférence d'au moins 2,5, mieux encore d'au moins 3, TFA représentant la quantité d'acides gras insaturés dans la configuration trans dans la première graisse partiellement hydrogénée en % en poids et ΔIV représentant la différence d'indice iode de la première graisse avant hydrogénation et après hydrogénation, S représentant un acide gras saturé ayant de 10 - 24 atomes de carbone et U représentant un acide gras mono ou polyinsaturé ayant de 18 - 22 atomes de carbone, et à intégrer une quantité de la première graisse dans la composition de tempérage à base de graisses.

17. Procédé tel que revendiqué dans la revendication 16, **caractérisé en ce que** la première graisse est hydrogénée jusqu'à ce qu'elle ait une teneur en S₂E d'au moins 5 % en poids, de préférence d'au moins 10 % en poids, idéalement d'au moins 13 % en poids, et le rapport pondéral S₂E / (100 - S₂U) > 0,5, de préférence > 0,8, idéalement > 1,5, E étant de l'acide iso-oléique trans.

18. Procédé tel que revendiqué dans la revendication 16 ou 17, **caractérisé en ce qu'**il est fait usage comme catalyseur d'un catalyseur au nickel, au platine ou au palladium, de préférence d'un catalyseur au nickel.

19. Procédé tel que revendiqué dans l'une quelconque des revendications 16 - 18, **caractérisé en ce que** l'hydrogénation est effectuée en présence d'un catalyseur au nickel sulfuré ou d'un catalyseur au nickel en présence de méthionine.

20. Procédé tel que revendiqué dans l'une quelconque des revendications 16 - 19, **caractérisé en ce que** la réaction d'hydrogénation est effectuée à une température entre 175 - 225 °C.

21. Procédé tel que revendiqué dans l'une quelconque des revendications 16 - 20, **caractérisé en ce que** le procédé comprend les étapes consistant à intégrer dans la composition de tempérage à base de graisses de 1 - 100 % en poids de la première graisse hydrogénée et de 99 - 0 % en poids d'une deuxième graisse non hydrogénée.
